# EUROPEAN PATENT APPLICATION

(11) **EP 4 394 685 A1**
(43) Date of publication of application: **03.07.2024**
(21) Application number: 22875536.9
(22) Date of filing: 08.07.2022
(51) Int. Cl.: G06Q 30/06, G06Q 10/08, G06Q 10/0836, G06Q 30/0601

(54) **INFORMATION PROCESSING METHOD, INFORMATION PROCESSING DEVICE, AND INFORMATION PROCESSING PROGRAM**

(30) Priority: 29.09.2021 JP 2021159915
(71) Applicant: Panasonic Intellectual Property Management Co., Ltd., Kadoma-shi, Osaka 571-0057 (JP)
(72) Inventor: OKUYAMA, Izumi, Kadoma-shi, Osaka 571-0057 (JP); YAGINUMA, Hirotada, Kadoma-shi, Osaka 571-0057 (JP)
(74) Representative: Grünecker Patent- und Rechtsanwälte PartG mbB
(86) International application number: PCT/JP2022/027142
(87) International publication number: WO 2023/053658

(57) **Abstract**

A server acquires purchase request information regarding an article a first user residing in a predetermined area requests to purchase, calculates a total amount of the article the first user requests to purchase based on the purchase request information, determines a first mobile body to be used for purchasing the article the first user requests to purchase from among a plurality of mobile bodies based on the total amount, determines a third user who performs substitution for purchase of the article the first user requests to purchase from among second users residing in the predetermined area and using the determined first mobile body, and notifies the determined third user of purchase content information regarding the purchase of the article indicated by the purchase request information.

## Description

### Technical Field

The present disclosure relates to a technology to determine a proxy who performs the substitution for purchase on behalf of a requester.

### Background Art

With the development of motorization, there has been an increase in suburban large-scale stores, leading to a trend of decreasing local retail stores. Due to the abolition and decline of public transportation, senior citizens who do not have a means of transportation or who have surrendered their driver's licenses are finding it difficult to purchase daily necessities such as groceries and household items. Therefore, a purchase substitution service is provided where a supporter performs the substitution for a purchase request from a requester.

For example, Patent Literature 1 discloses a purchase substitution service system that selects a plurality of supporters who uses the same retail store as the retail store a user frequently uses for purchase from a supporter database with which a supporter group is registered from a phone number of the user terminal, transmits intention information, the residential area of the user, and retail store information to terminals of the plurality of selected supporters, accepts an application for entrustment to a matching management server from the supporter who desires to accept the request for purchase among the plurality of supporters, accepts the application by the matching management server, and approves the applicant as an official supporter.

However, in the above-described conventional technology, it is difficult to determine a more optimal purchase proxy, and a further improvement has been required.

### Citation List

### Patent Literature

Patent Literature 1: JP 2019-139776 A

### Summary of Invention

The present disclosure has been made to solve the above problem, and an object thereof is to provide a technology capable of determining a more optimal purchase proxy.

An information processing method according to the present disclosure is an information processing method in an information processing device and includes: acquiring first information regarding an article a first user residing in a predetermined area requests to purchase; calculating a total amount of the article the first user requests to purchase based on the first information; determining a first mobile body to be used for purchasing the article the first user requests to purchase, from among a plurality of mobile bodies based on the total amount; determining a third user who performs substitution for purchase of the article the first user requests to purchase, from among second users residing in the predetermined area and using the determined first mobile body; and notifying the determined third user of second information regarding the purchase of the article indicated by the first information.

The present disclosure makes it possible to determine a more optimal purchase proxy.

### Brief Description of Drawings

FIG. 1 is a diagram showing an overall configuration of a purchase substitution system according to embodiments of the present disclosure.
FIG. 2 is a block diagram showing one example of a configuration of a server according to a first embodiment of the present disclosure.
FIG. 3 is a diagram showing one example of user information stored in a user database.
FIG. 4 is a diagram showing one example of a total amount to mobility correspondence table stored in a total amount to mobility correspondence table storage unit.
FIG. 5 is a flowchart showing one example of processing of the server according to the first embodiment of the present disclosure.
FIG. 6 is a diagram showing one example of a purchase acceptance screen displayed when accepting selection of an article to purchase on a user terminal.
FIG. 7 is a diagram showing one example of the purchase acceptance screen displayed when the quantity of the selected article is input on the user terminal.
FIG. 8 is a diagram showing one example of the purchase acceptance screen displayed when the selected article is ordered on the user terminal.
FIG. 9 is a diagram showing one example of the purchase acceptance screen displayed when the order for the article is completed on the user terminal.
FIG. 10 is a diagram showing one example of a substitution acceptance screen displayed when whether to accept a purchase substitution request is input on the user terminal.
FIG. 11 is a diagram showing one example of a purchase content notification screen displayed when purchase content information is notified on the user terminal.
FIG. 12 is a diagram showing one example of a purchase list screen displayed on the user terminal.
FIG. 13 is a diagram showing one example of a delivery list screen displayed on the user terminal.
FIG. 14 is a block diagram showing one example of a configuration of a server according to a second embodiment of the present disclosure.
FIG. 15 is a first flowchart showing one example of processing of the server according to the second embodiment of the present disclosure.
FIG. 16 is a second flowchart showing one example of processing of the server according to the second embodiment of the present disclosure.
FIG. 17 is a diagram showing one example of a substitution reservation acceptance screen displayed when whether to accept a purchase substitution reservation is input on the user terminal.
FIG. 18 is a diagram showing one example of a prospective proxy determination notification screen displayed on the user terminal.

### Description of Embodiments

### (Knowledge underlying present disclosure)

In the above-described conventional technology, an official supporter who performs the substitution for a purchase request is determined from among a plurality of supporters who uses the same retail store as the retail store a user frequently uses for purchase. Then, the official supporter uses a supporter terminal to call a user terminal, confirms the purchase content from the user, performs the substitution for purchase, and delivers products obtained through the purchase substitution to the user.

In this way, the supporter, who confirms the purchase content with the user after being determined to be the official supporter, does not know in advance the quantity of product the user will purchase. Therefore, if the total amount of product requested by the user exceeds the loading capacity of a mobile body used by the supporter, it is difficult for the supporter to deliver the product to the user in one delivery, and it is difficult to determine the more optimal supporter for purchase.

Conventionally, a user and a supporter have a one-to-one correspondence, with one supporter performing the substitution for purchase for one user. Therefore, if a sufficient number of supporters are not prepared, there is a risk of not being able to make a purchase request during a time zone when purchase requests are concentrated or on days when the weather is bad.

To solve the above problems, the following technology is disclosed.
(1) An information processing method according to one aspect of the present disclosure is an information processing method in an information processing device and includes: acquiring first information regarding an article a first user residing in a predetermined area requests to purchase; calculating a total amount of the article the first user requests to purchase based on the first information; determining a first mobile body to be used for purchasing the article the first user requests to purchase, from among a plurality of mobile bodies based on the total amount; determining a third user who performs substitution for purchase of the article the first user requests to purchase, from among second users residing in the predetermined area and using the determined first mobile body; and notifying the determined third user of second information regarding the purchase of the article indicated by the first information.

With this configuration, based on the total amount of article the first user requests to purchase, the first mobile body to use for purchasing the article the first user requests to purchase is determined from among the plurality of mobile bodies, and the third user who performs the substitution for purchase of the article the first user requests to purchase is determined from among the second users who use the determined first mobile body.

Therefore, the third user who uses the mobile body that can load the article the first user requests to purchase is determined, allowing the third user to deliver the article requested for purchase to the first user in one delivery, and making it possible to determine the more optimal purchase proxy.

(2) The information processing method according to (1) described above may further include presenting third information regarding the article available for purchase to a plurality of the first users residing in the predetermined area, in which acquiring the first information includes acquiring the first information regarding the article at least one first user of the plurality of first users requests to purchase.

With this configuration, the third information regarding the article available for purchase is presented to the plurality of first users residing in the predetermined area, and the first information regarding the article at least one first user among the plurality of first users requests to purchase is acquired.

Therefore, one third user can perform the substitution for purchase for the plurality of first users. Therefore, even if a sufficient number of proxies are not prepared, one third user can efficiently perform the substitution for purchase for the plurality of first users.

(3) In the information processing method according to (1) or (2) described above, the article may be sold at one or more stores located in the predetermined area.

With this configuration, the third user can purchase the article sold at one or more stores located in the predetermined area on behalf of the first user and deliver the purchased article to the first user.

(4) The information processing method according to (1) described above may further include: predicting the total amount of the article scheduled for purchase based on third information regarding the article available for purchase and a past purchase history of the article available for purchase before acquiring the first information; determining a second mobile body to be used for purchasing the article scheduled for purchase from among the plurality of mobile bodies based on the predicted total amount; and determining a prospective proxy user who performs substitution for the scheduled purchase of the article from among the second users residing in the predetermined area and using the determined second mobile body.

With this configuration, before acquiring the first information, the total amount of the article scheduled for purchase is predicted based on the third information regarding the article available for purchase and the past purchase history of the article available for purchase. Based on the predicted total amount, the second mobile body to use for purchasing the article scheduled for purchase is determined from among the plurality of mobile bodies, and the prospective proxy user who performs the substitution for scheduled purchase of the article is determined from among the second users who use the determined second mobile body.

Therefore, by securing in advance the mobile body that can load the article scheduled for purchase and the prospective proxy user who uses the mobile body, the actual proxy can be determined smoothly.

(5) In the information processing method according to (4) described above, determining the third user may include determining the prospective proxy user to be the third user when the first mobile body is identical to the second mobile body.

With this configuration, when the first mobile body is identical to the second mobile body, the prospective proxy user determined in advance can be determined to be the third user who actually performs the substitution for purchase.

(6) The information processing method according to any one of (1) to (5) described above may further include specifying delivery equipment required when delivering the article based on an attribute of the article, in which the second information may include information regarding the delivery equipment.

With this configuration, the delivery equipment required for delivering the article is specified based on the attribute of the article, and the second information including information regarding the specified delivery equipment is notified, allowing the third user, who is the proxy, to confirm in advance the delivery equipment required for delivering the article.

(7) In the information processing method according to any one of (1) to (6) described above, the plurality of mobile bodies may include two or more types of mobile bodies each having a different loadable capacity.

With this configuration, it is possible to determine the first mobile body that can load the article requested for purchase from among the two or more types of mobile bodies each having a different loadable capacity.

(8) In the information processing method according to (7) described above, the two or more types of mobile bodies may include a car, a motorcycle, and a bicycle.

With this configuration, it is possible to determine the first mobile body that can load the article requested for purchase from among a car, a motorcycle, and a bicycle.

(9) In the information processing method according to any one of (1) to (8) described above, the second information may include purchase list information indicating a list of the article to be purchased on behalf of the first users and delivery list information indicating a list of the purchased article for each of the first users of delivery destinations.

With this configuration, the third user is notified of the purchase list information indicating the list of the article to be purchased on behalf of the first users and the delivery list information indicating the list of the purchased article for each of the first users of delivery destinations. Therefore, the third user can purchase the requested article while checking the purchase list, and deliver the purchased article while checking the delivery list.

(10) In the information processing method according to any one of (1) to (9) described above, determining the third user may include determining the second user residing at a place closest to a store where the article is purchased as the third user from among the second users residing in the predetermined area and using the determined first mobile body.

With this configuration, since the second user residing at a place closest to the store where the article is purchased is determined as the third user, the travel distance from the place of residence of the third user to the store can be shortened.

(11) In the information processing method according to any one of (1) to (9) described above, determining the third user may include determining the second user residing at a place closest to an address of the first user as the third user from among the second users residing in the predetermined area and using the determined first mobile body.

With this configuration, since the second user residing at a place closest to the address of the first user is determined as the third user, the travel distance from the place of residence of the first user to the residence of the third user can be shortened.

(12) In the information processing method according to any one of (1) to (9) described above, determining the third user may include determining the second user who is able to purchase the article on a day when accepting substitution for purchase of the article as the third user from among the second users residing in the predetermined area and using the determined first mobile body.

With this configuration, since the second user who is able to purchase the article on a day when accepting substitution for purchase of the article is determined as the third user, it is possible to reliably determine the third user who can perform the substitution for purchase of the article.

The present disclosure can be implemented not only as the information processing method for performing characteristic processing as described above, but also as an information processing device or the like having a characteristic configuration corresponding to the characteristic method performed by the information processing method. The present disclosure can also be implemented as a computer program that causes a computer to execute characteristic processing included in such an information processing method. Therefore, even other aspects below can achieve an effect as in the above information processing method.

(13) An information processing device according to another aspect of the present disclosure includes: an acquisition unit that acquires first information regarding an article a first user residing in a predetermined area requests to purchase; a calculation unit that calculates a total amount of the article the first user requests to purchase based on the first information; a mobile body determination unit that determines a first mobile body to be used for purchasing the article the first user requests to purchase, from among a plurality of mobile bodies based on the total amount; a user determination unit that determines a third user who performs substitution for purchase of the article the first user requests to purchase, from among second users residing in the predetermined area and using the determined first mobile body; and a notification unit that notifies the determined third user of second information regarding the purchase of the article indicated by the first information.

(14) An information processing program according to another aspect of the present disclosure causes a computer to function as: an acquisition unit that acquires first information regarding an article a first user residing in a predetermined area requests to purchase; a calculation unit that calculates a total amount of the article the first user requests to purchase based on the first information; a mobile body determination unit that determines a first mobile body to be used for purchasing the article the first user requests to purchase, from among a plurality of mobile bodies based on the total amount; a user determination unit that determines a third user who performs substitution for purchase of the article the first user requests to purchase, from among second users residing in the predetermined area and using the determined first mobile body; and a notification unit that notifies the determined third user of second information regarding the purchase of the article indicated by the first information.

Embodiments of the present disclosure will be described below with reference to the accompanying drawings. Note that the following embodiments are one example embodying the present disclosure and do not limit the technical scope of the present disclosure.

### (First embodiment)

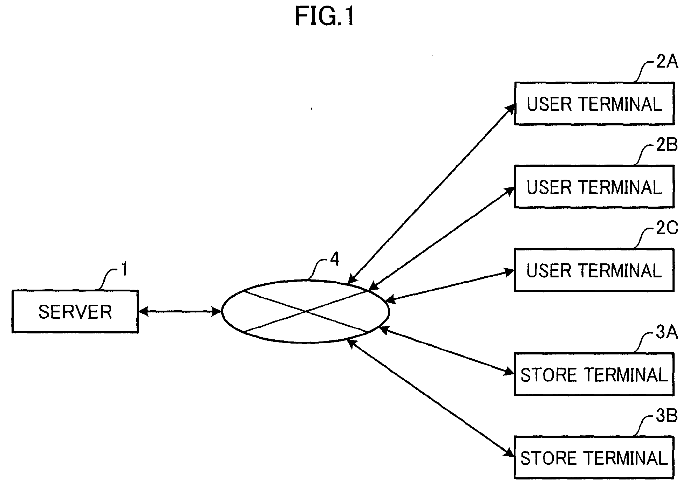

FIG. 1 is a diagram showing an overall configuration of a purchase substitution system according to an embodiment of the present disclosure.

The purchase substitution system shown in FIG. 1 includes a server 1, user terminals 2A, 2B, and 2C, and store terminals 3A and 3B.

The user terminals 2A, 2B, and 2C are, for example, smartphones, tablet computers, or personal computers, and are owned by users residing in a predetermined area. Each user is a requester who requests a purchase of an article sold in one or more stores located in the predetermined area, or a proxy who performs the substitution for purchase of an article other users request to purchase. The proxy purchases the article the requester requests to purchase and delivers the purchased article to the requester. Note that the proxy may deliver the purchased article to the requester's home, or may deliver the purchased article to a location designated by the requester other than the home. The user may only make a request to purchase an article, or may only perform the substitution for purchase of an article.

The user terminals 2A, 2B, and 2C accept input of user information and transmit the input user information to the server 1. The user information includes the user's name, address, email address, mobility to use, store to use, and service usage form. The mobility to use is a mobility used by the proxy when purchasing the article, for example, a bicycle, a bicycle with a luggage rack, a standard car, or a wagon. Note that the mobility may be owned by the proxy or only needs to be used by the proxy, for example, car sharing, bicycle rental, or mobility owned by the proxy's family. The service usage form indicates whether the user performs only purchase of the article, the user performs only substitution for purchase, or the user performs both purchase and substitution for purchase of the article.

The user terminals 2A, 2B, and 2C receive, from the server 1, sales article information about an article available for purchase in one or more stores located in the predetermined area (third information). Based on the sales article information, the user terminals 2A, 2B, and 2C display a purchase acceptance screen for presenting the article available for purchase and accepting the purchase of the article. The user terminals 2A, 2B, and 2C accept input of the article the requester requests to purchase on the purchase acceptance screen. The user terminals 2A, 2B, and 2C transmit, to the server 1, purchase request information regarding the article the requester requests to purchase (first information). The purchase request information includes the name of the requester, the name of the store where the article is purchased, the name of the article the requester requests to purchase, and the number of articles.

The user terminals 2A, 2B, and 2C receive substitution request information to request a proxy candidate to perform substitution for purchase. The substitution request information includes date and time information indicating the date and time of purchase and delivery, store information indicating the store to purchase the article, mobility information indicating the mobility to use, and delivery equipment information indicating delivery equipment required for delivery. Examples of the delivery equipment include cold bags and ice packs for keeping frozen or refrigerated foods cold, or cushioning materials for protecting a fragile article. Based on the substitution request information, the user terminals 2A, 2B, and 2C display a substitution acceptance screen for presenting the date and time of purchase and delivery, the store where the article is purchased, the mobility to use, and the delivery equipment required for delivery, and accepting whether to accept the purchase substitution request. The user terminals 2A, 2B, and 2C accept input from the proxy candidate as to whether to accept the purchase substitution request on the substitution acceptance screen. The user terminals 2A, 2B, and 2C transmit, to the server 1, substitution availability information indicating whether the proxy candidate accepts the purchase substitution request.

The user terminals 2A, 2B, and 2C receive, from the server 1, purchase content information (second information) regarding the purchase of the article indicated by the purchase request information (first information). The purchase content information includes purchase list information indicating a list of the articles to purchase on behalf of the requester and delivery list information indicating a list of purchased articles for each requester of the delivery destination. In addition, the purchase content information includes information indicating the delivery destination of the purchased articles. Based on the purchase content information, the user terminals 2A, 2B, and 2C display a purchase content notification screen to notify the date and time of purchase and delivery, the store to purchase the articles, the mobility to use, the delivery equipment required for delivery, and a list of the articles to purchase on behalf of the requester.

The store terminals 3A and 3B are, for example, smartphones, tablet computers, or personal computers, and are placed at stores located in the predetermined area. The store terminals 3A and 3B accept input of the store information and transmit the input store information to the server 1. The store information includes the name and address of the store.

In addition, the store terminals 3A and 3B accept input of the sales article information regarding the articles available for purchase at the store (third information) from employees, and transmit the input sales article information to the server 1. The store terminals 3A and 3B are placed at different stores. The sales article information includes the name of the store that sells the article, the name, price, capacity, and attribute information on the article, and the cut-off time. The attribute information is information indicating that the article requires special handling during delivery, and includes, for example, information indicating that the article requires refrigeration or freezing, and information indicating that the article is fragile. The cut-off time is time at which acceptance of purchase is finished. For example, the store terminals 3A and 3B transmit the sales article information regarding the articles available for purchase at the store the following day to the server 1 at night.

Note that the number of user terminals is not limited to three. The number of store terminals is not limited to two.

The server 1 is, for example, a cloud server including one or more computers, one example of an information processing device. The server 1 is communicably connected to the user terminals 2A, 2B, and 2C via a network 4. In addition, the server 1 is communicably connected to the store terminals 3A and 3B via the network 4. The network 4 is, for example, a wide-area communication network including an Internet communication network and a mobile phone communication network.

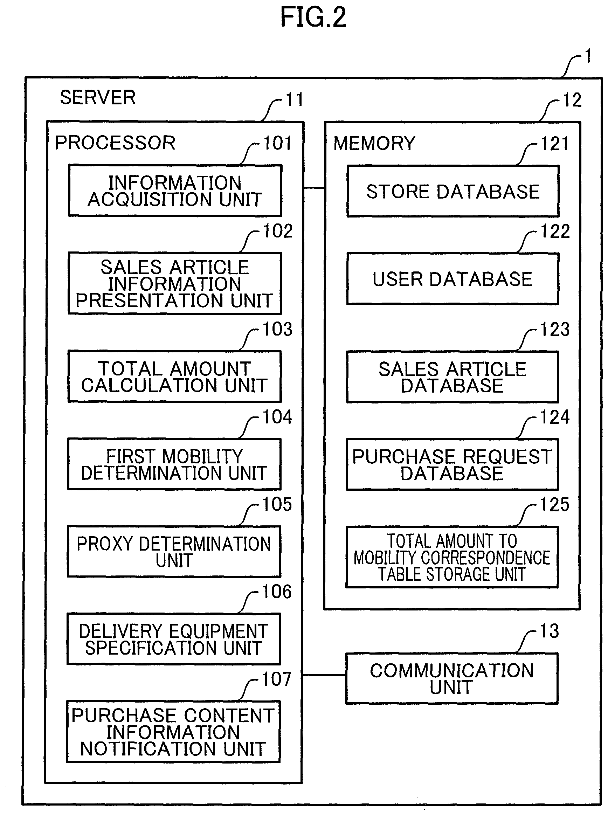

FIG. 2 is a block diagram showing one example of a configuration of the server 1 according to the first embodiment of the present disclosure.

The server 1 shown in FIG. 2 includes a processor 11, a memory 12, and a communication unit 13.

The processor 11 is, for example, a central processing unit (CPU). An information acquisition unit 101, a sales article information presentation unit 102, a total amount calculation unit 103, a first mobility determination unit 104, a proxy determination unit 105, a delivery equipment specification unit 106, and a purchase content information notification unit 107 are implemented by the processor 11.

The memory 12 is, for example, a storage device capable of storing various types of information, such as a random access memory (RAM), a solid state drive (SSD), or a flash memory. A store database 121, a user database 122, a sales article database 123, a purchase request database 124, and a total amount to mobility correspondence table storage unit 125 are implemented by the memory 12.

The communication unit 13 receives the user information transmitted by the user terminals 2A, 2B, and 2C. The communication unit 13 receives the store information transmitted by the store terminals 3A and 3B. The communication unit 13 receives the sales article information transmitted by the store terminals 3A and 3B. The communication unit 13 transmits the sales article information to the user terminals 2A, 2B, and 2C. The communication unit 13 receives the purchase request information transmitted by the user terminals 2A, 2B, and 2C. The communication unit 13 transmits the substitution request information to the user terminals 2A, 2B, and 2C. The communication unit 13 receives the substitution availability information transmitted by the user terminals 2A, 2B, and 2C. The communication unit 13 transmits the purchase content information to the user terminals 2A, 2B, and 2C.

The information acquisition unit 101 acquires the store information received by the communication unit 13, and stores the acquired store information in the store database 121.

The store database 121 is a database that stores the store information that associates the store ID, the store name, and the address.

The information acquisition unit 101 acquires the user information received by the communication unit 13, and stores the acquired user information in the user database 122.

The user database 122 is a database that stores the user information that associates the user ID, the user name, the address, the email address, the mobility to use, the store to use, and the service usage form.

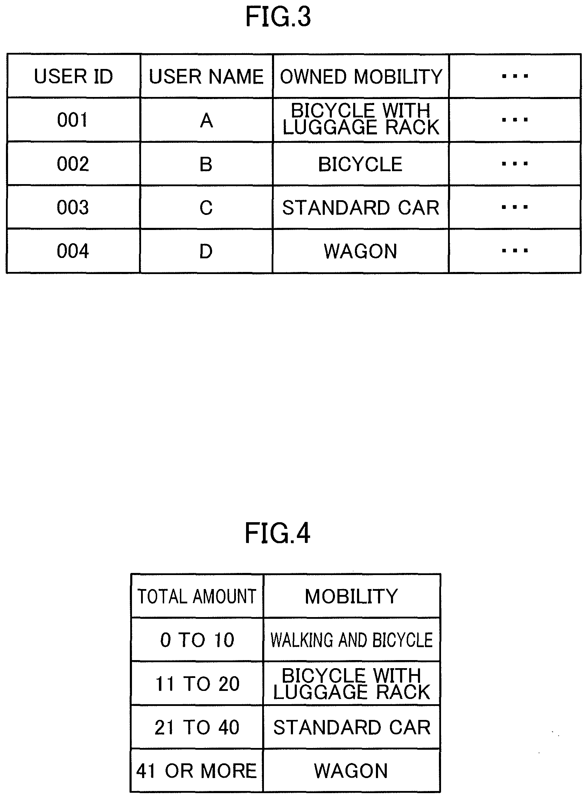

FIG. 3 is a diagram showing one example of the user information stored in the user database 122.

As shown in FIG. 3, the user ID for identifying the user is associated with the mobility used by the user. For example, the user "A" uses a bicycle with a luggage rack, the user "B" uses a bicycle, the user "C" uses a standard car, and the user "D" uses a wagon.

The information acquisition unit 101 acquires the sales article information received by the communication unit 13, and stores the acquired sales article information in the sales article database 123.

The sales article database 123 is a database that stores the sales article information that associates the store name that sells the article, the name, price, capacity, and attribute information on the article available for purchase at the store.

The sales article information presentation unit 102 presents the sales article information regarding the article available for purchase (third information) to a plurality of requesters residing in the predetermined area. The sales article information presentation unit 102 outputs the sales article information stored in the sales article database 123 to the user terminals 2A, 2B, and 2C. At this time, the sales article information presentation unit 102 refers to the user information on each requester stored in the user database 122, reads the sales article information corresponding to the store to use from the sales article database 123, and transmits the read sales article information to the user terminal of each requester.

The information acquisition unit 101 acquires the purchase request information regarding the article the requester residing in the predetermined area (first user) requests to purchase (first information). The information acquisition unit 101 acquires the purchase request information received by the communication unit 13, and stores the acquired purchase request information in the purchase request database 124. Note that the information acquisition unit 101 acquires the purchase request information regarding the article at least one requester (first user) out of the plurality of requesters (first user) requests to purchase (first information). Upon acquiring the purchase request information, the information acquisition unit 101 assigns an order number for identifying the purchase request information by the requester to the purchase request information, and stores the purchase request information to which the order number is assigned in the purchase request database 124. The communication unit 13 transmits the order number to the user terminal that has transmitted the purchase request information. The information acquisition unit 101 is one example of an acquisition unit.

The purchase request database 124 is a database that stores the purchase request information that associates the name of the requester, the name of the store where the articles are purchased, the name of the article the requester requests to purchase, and the quantity.

The total amount to mobility correspondence table storage unit 125 stores in advance the total amount to mobility correspondence table that associates the total amount of the article with the mobility.

FIG. 4 is a diagram showing one example of the total amount to mobility correspondence table stored in the total amount to mobility correspondence table storage unit 125. Note that the unit of the total amount is, for example, liter.

As shown in FIG. 4, the mobility of walking and bicycle is associated with the total amount from 0 to 10 liters, the mobility of bicycle with a luggage rack is associated with the total amount from 11 to 20 liters, the mobility of standard car is associated with the total amount from 21 to 40 liters, and the mobility of wagon is associated with the total amount of 41 liters or more.

Note that the correspondence between the range of the total amount and the mobility shown in FIG. 4 is one example, and another range and another mobility may be used.

The total amount calculation unit 103 calculates the total amount of the article the requester (first user) requests to purchase, based on the purchase request information (first information). Here, when the plurality of requesters requests to purchase, the total amount calculation unit 103 calculates the total amount of all the articles the plurality of requesters requests to purchase. The total amount calculation unit 103 is one example of a calculation unit.

Based on the total amount calculated by the total amount calculation unit 103, the first mobility determination unit 104 determines the first mobility (first mobile body) to use for the purchase of the article the requester (first user) requests to purchase from among the plurality of mobilities (mobile bodies). Note that the plurality of mobilities includes two or more types of mobility with different loadable capacities. The two or more types of mobility include, for example, a car, a motorcycle, and a bicycle. The first mobility determination unit 104 refers to the total amount to mobility correspondence table stored in the total amount to mobility correspondence table storage unit 125 to specify the first mobility corresponding to the total amount calculated by the total amount calculation unit 103. For example, when the total amount is 30 liters, the first mobility determination unit 104 refers to the total amount to mobility correspondence table shown in FIG. 4 to determine a standard car to be the first mobility. The first mobility determination unit 104 is one example of a mobile body determination unit.

The proxy determination unit 105 determines the proxy (third user) who performs the substitution for purchase of the article the requester (first user) requests to purchase, from among the mobility users (second user) residing in the predetermined area and using the first mobility (first mobile body) determined by the first mobility determination unit 104. The proxy determination unit 105 refers to the user information on the plurality of mobility users stored in the user database 122 to determine the proxy from among the mobility users using the first mobility determined by the first mobility determination unit 104. For example, when the first mobility is a standard car, the proxy determination unit 105 refers to the user information shown in FIG. 3 to determine the mobility user "C" who uses a standard car to be the proxy. The proxy determination unit 105 is one example of a user determination unit.

Note that if there is a plurality of mobility users using the same first mobility, the proxy determination unit 105 may determine the mobility user who is located closest to the store where the article is purchased to be the proxy. The user terminals 2A, 2B, and 2C may acquire the present location by using a GPS receiver and transmit the acquired present location to the server 1. Based on the present location of the user terminals 2A, 2B, and 2C, the proxy determination unit 105 may determine the mobility user who is located closest to the store where the article is purchased to be the proxy. Meanwhile, if there is a plurality of mobility users using the same first mobility, the proxy determination unit 105 may determine the mobility user who is randomly selected from among the plurality of mobility users to be the proxy.

Note that the proxy determination unit 105 may determine the mobility user (second user) residing at a place closest to the store where the article is purchased as the proxy (third user) from among the mobility users (second user) residing in the predetermined area and using the determined first mobility (first mobile body).

In addition, the proxy determination unit 105 may determine the mobility user (second user) residing at a place closest to the address of the requester (first user) as the proxy (third user) from among the mobility users (second user) residing in the predetermined area and using the determined first mobility (first mobile body).

In addition, the proxy determination unit 105 may determine the mobility user (second user) who can purchase the article on the day of accepting the substitution for purchase of the article as the proxy (third user) from among the mobility users (second user) residing in the predetermined area and using the determined first mobility (first mobile body). In this case, for example, the user database 122 may register in advance information regarding scheduled usage time (date and time, time zone, and the like) of the mobility to use.

When there is a plurality of mobility users using the same first mobility, the proxy determination unit 105 may determine one mobility user to be the proxy, based on attribute information on the requester and attribute information on the plurality of mobility users. The attribute information is, for example, gender or age. For example, the proxy determination unit 105 may determine the mobility user who has the same gender as the requester to be the proxy, or may determine the mobility user who is of the same age as the requester to be the proxy. The attribute information is included in the user information.

In the present first embodiment, to begin with, the proxy determination unit 105 determines the proxy candidate from among the mobility users using the first mobility determined by the first mobility determination unit 104. At this time, the proxy determination unit 105 determines the mobility user who is located closest to the store where the article is purchased to be the proxy candidate. Next, the proxy determination unit 105 transmits the substitution request information to request the proxy candidate to perform substitution for purchase to the user terminal of the proxy candidate. When the substitution availability information indicating that the proxy candidate accepts the purchase substitution request is received by the communication unit 13, the proxy determination unit 105 determines the proxy candidate to be the proxy. Meanwhile, when the substitution availability information indicating that the proxy candidate does not accept the purchase substitution request is received by the communication unit 13, the proxy determination unit 105 determines again the proxy candidate from among other mobility users using the first mobility. At this time, the proxy determination unit 105 determines the mobility user who is located second closest to the store where the article is purchased to be the proxy candidate. Then, the proxy determination unit 105 repeatedly determines the proxy candidate and transmits the substitution request information until the proxy is determined.

When there is a plurality of mobility users using the same first mobility, the proxy determination unit 105 may determine all the plurality of mobility users to be the proxy candidates. Then, the proxy determination unit 105 may broadcast the substitution request information for requesting all the proxy candidates to perform the substitution for purchase to the user terminals of all the proxy candidates. Then, the proxy determination unit 105 may determine the proxy candidate who first transmits the substitution availability information indicating acceptance of the purchase substitution request to be the proxy.

The delivery equipment specification unit 106 specifies the delivery equipment required for delivery of the article, based on the attribute of the article. The delivery equipment specification unit 106 acquires the attribute information corresponding to the article included in the purchase request information from the sales article information, and specifies the delivery equipment based on the acquired attribute information. For example, when the attribute information includes information indicating that the article requires refrigeration or freezing, the delivery equipment specification unit 106 specifies cold bags and ice packs as the delivery equipment. Meanwhile, for example, when the attribute information includes information indicating that the article is fragile, the delivery equipment specification unit 106 specifies cushioning materials as the delivery equipment.

The purchase content information notification unit 107 notifies the purchase content information (second information) regarding the purchase of the articles indicated by the purchase request information (first information). The purchase content information includes information regarding the delivery equipment specified by the delivery equipment specification unit 106. The purchase content information notification unit 107 is one example of a notification unit.

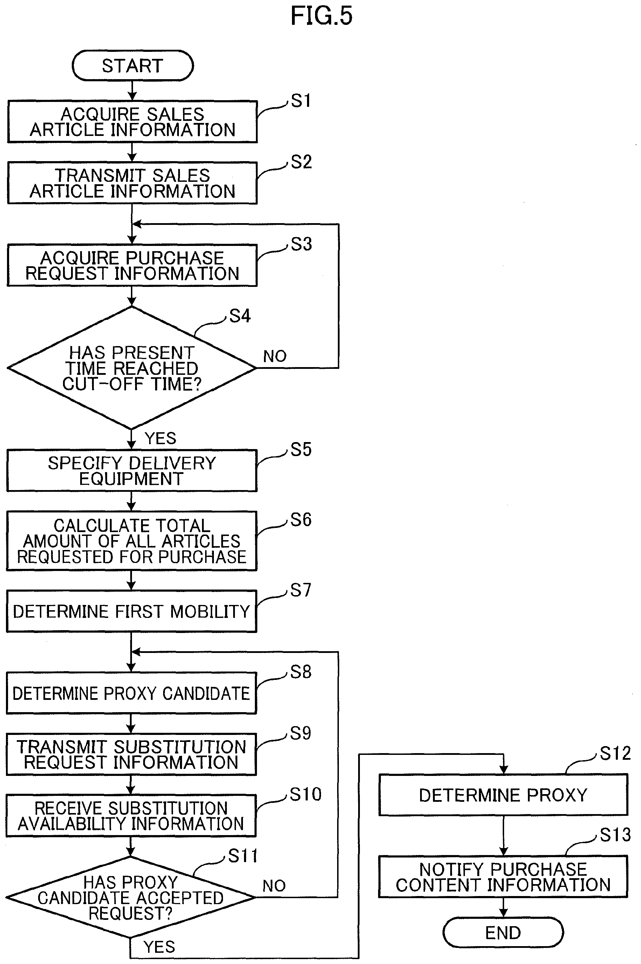

The configuration of the purchase substitution system in the first embodiment has been described above. Subsequently, the processing of the purchase substitution system will be described. FIG. 5 is a flowchart showing one example of the processing of the server 1 according to the first embodiment of the present disclosure.

To begin with, in step S1, the information acquisition unit 101 acquires the sales article information transmitted by the store terminals 3A and 3B from the communication unit 13. The information acquisition unit 101 stores the acquired sales article information in the sales article database 123.

Next, in step S2, the sales article information presentation unit 102 transmits the sales article information regarding the article available for purchase to the user terminals 2A, 2B, and 2C of the plurality of requesters residing in the predetermined area. The sales article information presentation unit 102 acquires the sales article information from the sales article database 123, and transmits the acquired sales article information to the user terminals 2A, 2B, and 2C via the communication unit 13. Upon receiving the sales article information, the user terminals 2A, 2B, and 2C display the purchase acceptance screen for presenting the article available for purchase and accepting the purchase of the article. Then, the user terminals 2A, 2B, and 2C transmit, to the server 1, the purchase request information regarding the article the requester requests to purchase.

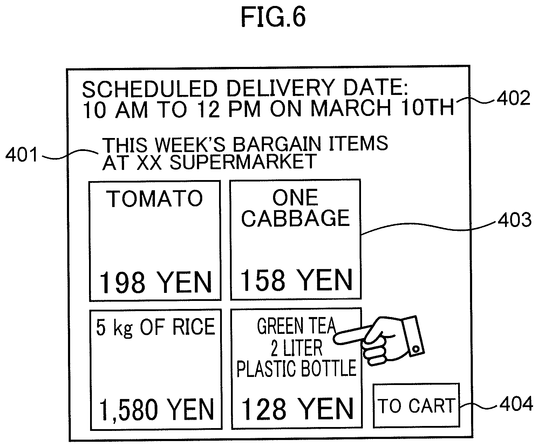

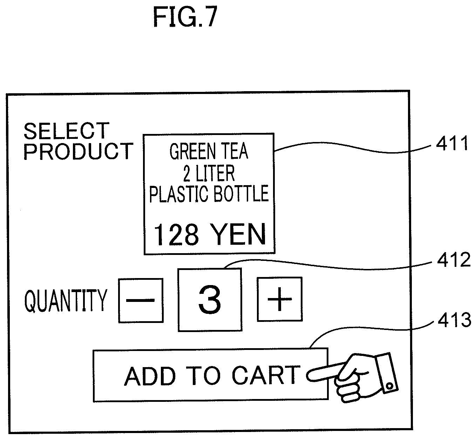

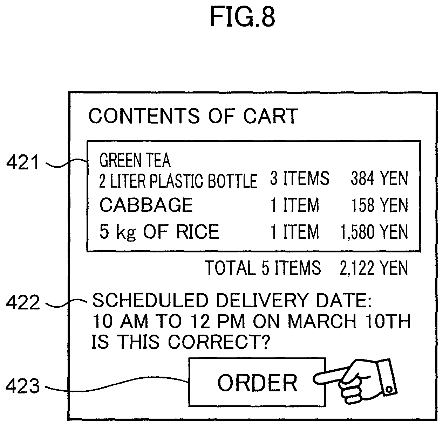

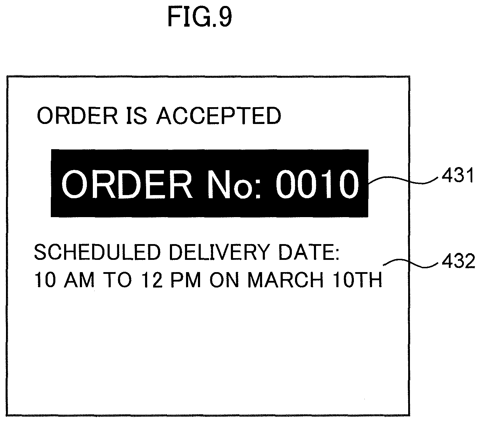

FIG. 6 is a diagram showing one example of the purchase acceptance screen displayed when accepting selection of the article to purchase on the user terminals 2A, 2B, and 2C. FIG. 7 is a diagram showing one example of the purchase acceptance screen displayed when the quantity of the selected article is input on the user terminals 2A, 2B, and 2C. FIG. 8 is a diagram showing one example of the purchase acceptance screen displayed when the selected article is ordered on the user terminals 2A, 2B, and 2C. FIG. 9 is a diagram showing one example of the purchase acceptance screen displayed when the order for the article is completed on the user terminals 2A, 2B, and 2C.

Upon receiving the sales article information, the user terminals 2A, 2B, and 2C display the purchase acceptance screen shown in FIG. 6. On the purchase acceptance screen shown in FIG. 6, a store name 401 where the requester desires to make a purchase, scheduled date and time 402 when the article requested for purchase will be delivered to the requester, article icons 403 indicating the articles available for purchase, and a cart button 404 for displaying the article added to a virtual cart are displayed. The requester selects the article icon 403 requested for purchase from among the displayed plurality of article icons 403.

Upon selection of the article icon by the requester, the user terminals 2A, 2B, and 2C display the purchase acceptance screen shown in FIG. 7. On the purchase acceptance screen shown in FIG. 7, an article icon 411 indicating the article selected by the requester, a quantity input column 412 for inputting the quantity of the article the requester desires to purchase, and a purchase button 413 for inputting the article the requester desires to purchase into a virtual cart are displayed. The requester inputs the quantity of the article the requester desires to purchase into the quantity input column 412, and touches the purchase button 413. Then, the user terminals 2A, 2B, and 2C display the purchase acceptance screen shown in FIG. 6 again, and further accept the selection of the article the requester requests to purchase.

When the requester finishes selecting the article and inputting the quantity, and the cart button 404 on the purchase acceptance screen shown in FIG. 6 is touched, the user terminals 2A, 2B, and 2C display the purchase acceptance screen shown in FIG. 8. On the purchase acceptance screen shown in FIG. 8, an article presentation column 421 that presents the name, quantity, and price of the articles selected by the requester, scheduled date and time 422 when the articles requested for purchase will be delivered to the requester, and an order button 423 for confirming the order of the articles are displayed. When requesting the purchase of the articles displayed in the article presentation column 421, the requester touches the order button 423. When the requester touches the order button 423, the user terminals 2A, 2B, and 2C transmit the purchase request information to the server 1. The purchase request information is information indicating the article and quantity the requester requests to purchase. Note that upon receiving the purchase request information, the server 1 transmits the order number for identifying the purchase request information by the requester to the user terminals 2A, 2B, and 2C.

Upon receiving the order number transmitted by the server 1, the user terminals 2A, 2B, and 2C display the purchase acceptance screen shown in FIG. 9. On the purchase acceptance screen shown in FIG. 9, an order number 431 and scheduled date and time 432 when the articles requested for purchase will be delivered to the requester are displayed.

Note that the timing when the sales article information presentation unit 102 transmits the sales article information can be any time if the timing is from when the sales article information is acquired until the cut-off time.

Next, in step S3, the information acquisition unit 101 acquires the purchase request information transmitted by the user terminals 2A, 2B, and 2C from the communication unit 13. The information acquisition unit 101 stores the acquired purchase request information in the purchase request database 124.

Next, in step S4, the information acquisition unit 101 determines whether the present time has reached the cut-off time when the purchase acceptance is closed. The cut-off time is included in the sales article information. Here, when it is determined that the present time has not reached the cut-off time (NO in step S4), the process returns to step S3.

Meanwhile, when it is determined that the present time has reached the cut-off time (YES in step S4), in step S5, the delivery equipment specification unit 106 acquires the attribute information corresponding to the article included in the purchase request information from the sales article information, and specifies the delivery equipment required when delivering the article, based on the acquired attribute information. Note that when the delivery equipment is not required for delivery of the requested article, the delivery equipment specification unit 106 does not specify the delivery equipment.

Next, in step S6, the total amount calculation unit 103 calculates the total amount of all the articles at least one requester requests to purchase, based on the purchase request information. At this time, the total amount calculation unit 103 specifies at least one article at least one requester requests to purchase from the purchase request information. Then, the total amount calculation unit 103 extracts the capacity corresponding to the specified at least one article from the sales article information stored in the sales article database 123. Then, the total amount calculation unit 103 calculates the total amount of the articles the requester requests to purchase, by adding all the extracted capacities.

Next, in step S7, based on the total amount calculated by the total amount calculation unit 103, the first mobility determination unit 104 determines the first mobility to use for the purchase of the article the requester requests to purchase, from among the plurality of mobilities. At this time, the first mobility determination unit 104 extracts the mobility corresponding to the total amount calculated by the total amount calculation unit 103 from the total amount to mobility correspondence table stored in the total amount to mobility correspondence table storage unit 125, and determines the extracted mobility to be the first mobility.

Next, in step S8, the proxy determination unit 105 determines the proxy candidate who performs the substitution for purchase of the article the requester requests to purchase, from among the mobility users residing in the predetermined area and using the first mobility determined by the first mobility determination unit 104. At this time, the proxy determination unit 105 identifies the mobility user who uses the first mobility determined by the first mobility determination unit 104 from the user information on the plurality of users stored in the user database 122, and determines the identified mobility user to be the proxy candidate. When there is a plurality of mobility users who uses the first mobility among the plurality of mobility users registered with the user database 122, the proxy determination unit 105 may determine the mobility user located closest to the store where the article is purchased to be the proxy candidate among the plurality of mobility users using the first mobility.

The proxy determination unit 105 may acquire information indicating that it is possible to perform substitution for purchase from the user terminals. Then, the proxy determination unit 105 may determine the mobility user who uses the first mobility and can perform substitution for purchase, among the plurality of mobility users registered with the user database 122, to be the proxy candidate.

Next, in step S9, the proxy determination unit 105 transmits the substitution request information to request the proxy candidate to perform substitution for purchase to the user terminal of the proxy candidate via the communication unit 13. Upon receiving the substitution request information, based on the substitution request information, the user terminal displays the substitution acceptance screen for presenting the date and time of purchase and delivery, the store where the article is purchased, the mobility to use, and the delivery equipment required for delivery, and accepting whether to accept the purchase substitution request. Then, the user terminal transmits, to the server 1, the substitution availability information indicating whether the proxy candidate accepts the purchase substitution request.

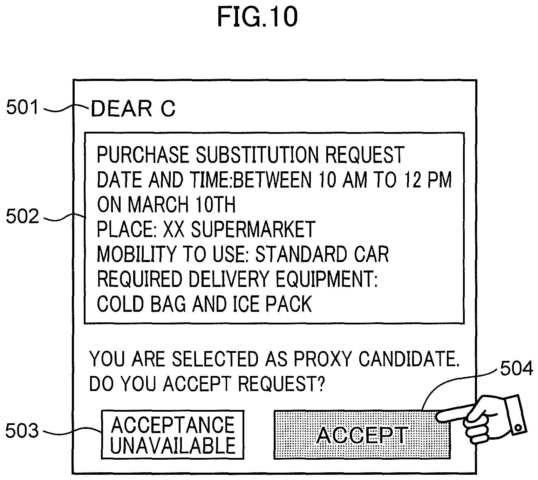

FIG. 10 is a diagram showing one example of the substitution acceptance screen displayed when whether to accept the purchase substitution request is input on the user terminals 2A, 2B, and 2C.

On the substitution acceptance screen shown in FIG. 10, a proxy candidate name 501, a purchase content presentation column 502, an acceptance unavailable button 503 for the proxy candidate to decline the purchase substitution request, and an acceptance button 504 for the proxy candidate to accept the purchase substitution request are displayed. The purchase content presentation column 502 includes the date and time of purchase and delivery, the store where the article is purchased, the mobility to use, and the delivery equipment required for delivery. The proxy candidate touches the acceptance unavailable button 503 when declining the purchase substitution request. The proxy candidate touches the acceptance button 504 when accepting the purchase substitution request. When the acceptance unavailable button 503 or the acceptance button 504 is touched, the user terminals 2A, 2B, and 2C transmit, to the server 1, the substitution availability information indicating whether the proxy candidate accepts the purchase substitution request.

When the proxy candidate does not own the delivery equipment required for delivery, the proxy candidate cannot perform the substitution for purchase. Therefore, when the proxy candidate does not own the delivery equipment displayed in the purchase content presentation column 502, the proxy candidate touches the acceptance unavailable button 503.

Next, in step S10, the communication unit 13 receives the substitution availability information indicating whether the proxy candidate accepts the purchase substitution request.

Next, in step S11, the proxy determination unit 105 determines whether the proxy candidate has accepted the purchase substitution request. Here, when it is determined that the proxy candidate has not accepted the purchase substitution request (NO in step S 11), the process returns to step S8. Then, in step S8, the proxy determination unit 105 determines the proxy candidate again. At this time, the proxy determination unit 105 may determine the mobility user who is located second closest to the store where the article is purchased, among the plurality of mobility users registered with the user database 122 and using the first mobility, to be the proxy candidate.

When there is no mobility user who uses the first mobility determined by the first mobility determination unit 104 among the mobility users registered with the user database 122, or when all the proxy candidates decline the purchase substitution request, the proxy determination unit 105 may determine the mobility that has a larger capacity than the mobility determined by the first mobility determination unit 104 to be the first mobility. For example, when there is no mobility user who uses a standard car determined by the first mobility determination unit 104 among the mobility users registered with the user database 122, the proxy determination unit 105 may determine a wagon with a larger capacity than a standard car as the first mobility.

When there is no mobility user who uses the first mobility determined by the first mobility determination unit 104 among the mobility users registered with the user database 122, or when all the proxy candidates decline the purchase substitution request, the proxy determination unit 105 may determine the mobility that has a smaller capacity than the mobility determined by the first mobility determination unit 104 to be the first mobility, and determine the plurality of proxy candidates who uses the determined first mobility. For example, when there is no mobility user who uses a standard car determined by the first mobility determination unit 104 among the mobility users registered with the user database 122, the proxy determination unit 105 may determine a bicycle with a luggage rack with a smaller capacity than a standard car as the first mobility. Then, the proxy determination unit 105 may determine a plurality of proxy candidates who uses a bicycle with a luggage rack.

Meanwhile, when it is determined that the proxy candidate has accepted the purchase substitution request (YES in step S11), in step S12, the proxy determination unit 105 determines the proxy candidate who has accepted the purchase substitution request to be the proxy.

Next, in step S13, the purchase content information notification unit 107 notifies the proxy of the purchase content information regarding the purchase of the article indicated by the purchase request information. The purchase content information notification unit 107 transmits the purchase content information to the user terminal of the proxy via the communication unit 13.

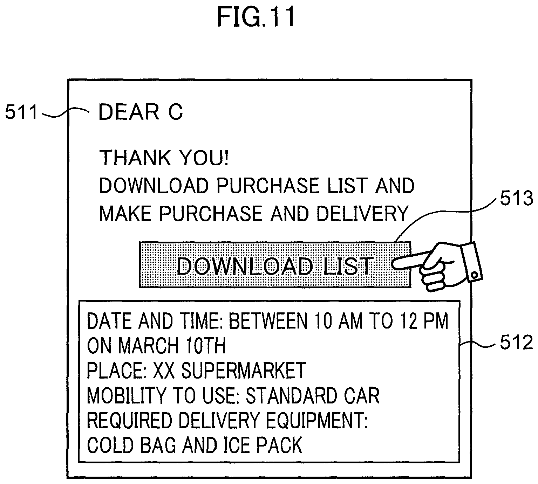

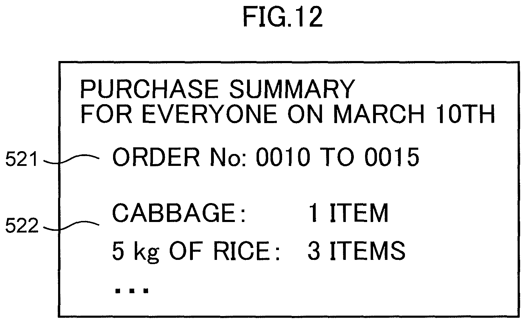

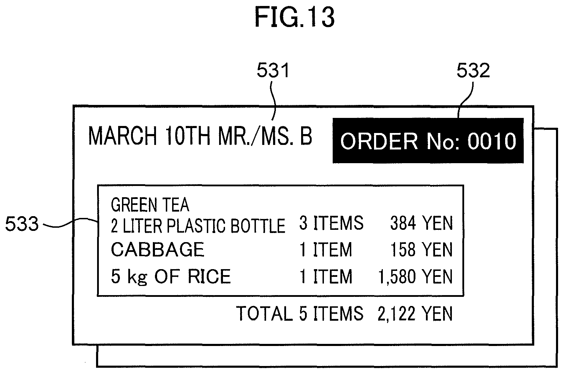

FIG. 11 is a diagram showing one example of the purchase content notification screen displayed when the purchase content information is notified on the user terminal 2C. FIG. 12 is a diagram showing one example of the purchase list screen displayed on the user terminal 2C. FIG. 13 is a diagram showing one example of the delivery list screen displayed on the user terminal 2C. Note that the user terminal 2C is the user terminal used by the proxy.

On the purchase content notification screen shown in FIG. 11, a proxy candidate name 511, a purchase content presentation column 512, a list acquisition button 513 for acquiring a purchase list that is a list of all the articles to purchase on behalf of the requester and a delivery list that is a list of the articles for each requester of delivery destination are displayed. The purchase content presentation column 512 includes the date and time of purchase and delivery, the store where the article is purchased, the mobility to use, and the delivery equipment required for delivery. When displaying the purchase list and the delivery list, the proxy touches the list acquisition button 513.

When the list acquisition button 513 is touched, the user terminal 2C acquires the purchase list and the delivery list from the server 1, and displays the purchase list screen shown in FIG. 12 and the delivery list screen shown in FIG. 13. On the purchase list screen shown in FIG. 12, all order numbers 521 requested by the plurality of requesters and a purchase list 522 that presents the names and quantities of all the articles to be purchased by the proxy are displayed. The purchase list 522 includes the names and quantities of all the articles ordered by the plurality of requesters. The proxy actually goes to the store and purchases the articles at the store while looking at the purchase list 522 displayed on the purchase list screen. At this time, the total amount of the articles the proxy purchases is equal to or less than the capacity that can be loaded on the mobility the proxy uses. Therefore, the proxy can load all the purchased articles onto the mobility.

Then, the proxy delivers the purchased articles to the place designated by the requester. On the delivery list screen shown in FIG. 13, a requester name 531, an order number 532, and a delivery list 533 that presents the names, quantities, and prices of the articles for each requester of the delivery destination are displayed. The proxy delivers the purchased articles to each requester while looking at the delivery list 533 displayed on the delivery list screen. Note that the delivery list screen may include the address of the delivery destination or a map showing the delivery destination.

In this way, based on the total amount of the articles the requester requests to purchase, the first mobility to use for the purchase of the articles the requester requests to purchase is determined from among the plurality of mobile bodies, and the proxy who performs the substitution for purchase of the articles the requester requests to purchase is determined from among the mobility users who use the determined first mobility. Therefore, the proxy who uses the mobility that can load the articles the requester requests to purchase is determined, allowing the proxy to deliver the articles requested for purchase to the requester in one delivery, and making it possible to determine the more optimal purchase proxy.

The proxy can efficiently perform the substitution for purchase requested by the plurality of requesters. The mobility suitable for the total amount of the articles the requesters request to purchase is used, allowing even one proxy to perform the substitution for purchase safely and with little burden. Since the mobility used by the mobility user registered in advance with the server 1 will be used to perform the substitution for purchase, the proxy does not need to newly purchase the mobility.

Since the mobility suitable for the total amount of the articles the requesters request to purchase will be matched, even if there is no mobility with a large capacity such as a wagon, it is possible to perform the substitution for purchase by using a mobility with a small capacity, such as a light vehicle or a regular bicycle, and the mobility used by a resident residing in the predetermined area can be effectively used. This further enables development of services that connect people in the local area, such as a service to allow the requester who requests to purchase the article and the proxy who performs the substitution for purchase to meet face-to-face, making it possible to revitalize local communities and improve psychological safety.

Note that the present first embodiment presents the delivery equipment required for delivery to the proxy candidate and the proxy. However, the present disclosure is not particularly limited to this example, and the user information may include the delivery equipment used by the mobility user. In this case, the proxy determination unit 105 may specify the mobility user who uses the first mobility determined by the first mobility determination unit 104 and uses the delivery equipment required to deliver the article included in the purchase request information from the user information on the plurality of mobility users stored in the user database 122, and determine the specified mobility user to be the proxy candidate.

### (Second embodiment)

In the first embodiment, the proxy is determined after the purchase request information is acquired from the requester. Meanwhile, in the second embodiment, before the purchase request information is acquired from the requester, the total amount of the articles to be requested for purchase is predicted, and the mobility user who uses the mobility that can load the articles with the predicted total amount is determined in advance as a prospective proxy.

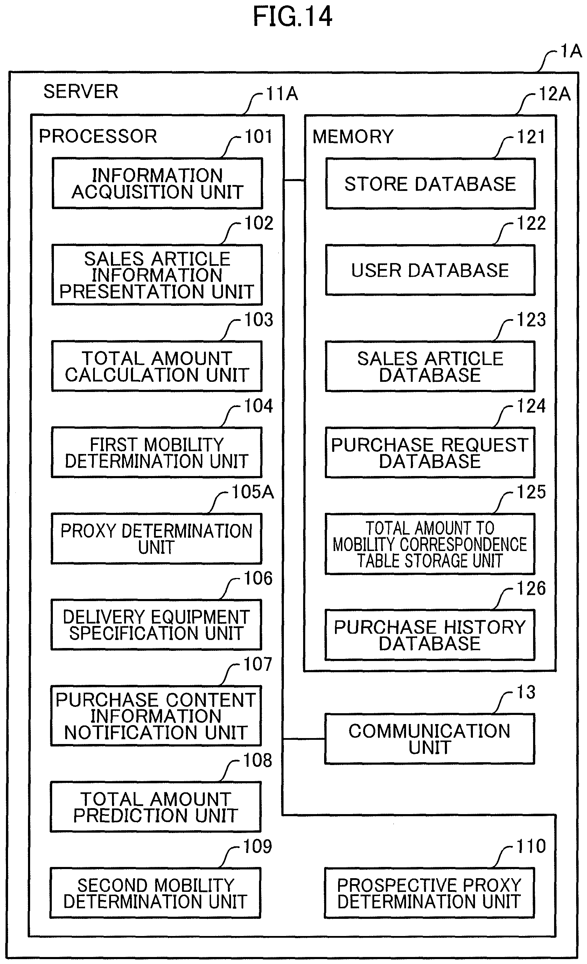

FIG. 14 is a block diagram showing one example of a configuration of a server 1A according to the second embodiment of the present disclosure. The configuration of the purchase substitution system is the same as in the first embodiment.

The server 1A shown in FIG. 14 includes a processor 11A, a memory 12A, and a communication unit 13. Note that in the present second embodiment, the same components as those in the first embodiment will be denoted with the same reference sign, and description thereof will be omitted.

An information acquisition unit 101, a sales article information presentation unit 102, a total amount calculation unit 103, a first mobility determination unit 104, a proxy determination unit 105, a delivery equipment specification unit 106, a purchase content information notification unit 107, a total amount prediction unit 108, a second mobility determination unit 109, and a prospective proxy determination unit 110 are implemented by the processor 11A.

A store database 121, a user database 122, a sales article database 123, a purchase request database 124, a total amount to mobility correspondence table storage unit 125, and a purchase history database 126 are implemented by the memory 12A.

The purchase history database 126 is a database that stores purchase history information indicating past purchase history by the user.

The total amount prediction unit 108 predicts the total amount of the articles scheduled for purchase before the purchase request information (first information) is acquired, based on sales article information regarding the articles available for purchase (third information) and past purchase history of the articles available for purchase.

The second mobility determination unit 109 determines a second mobility to use for the purchase of the article scheduled for purchase (second mobile body) from among a plurality of mobilities (mobile body) based on the total amount predicted by the total amount prediction unit 108.

The prospective proxy determination unit 110 determines a prospective proxy who performs the substitution for prospective purchase of the article (prospective proxy user), from among mobility users (second user) residing in a predetermined area and using the second mobility (second mobile body) determined by the second mobility determination unit 109. The prospective proxy determination unit 110 refers to user information on the plurality of mobility users stored in the user database 122 to determine the prospective proxy from among the mobility users using the second mobility determined by the second mobility determination unit 109. For example, when the second mobility is a standard car, the prospective proxy determination unit 110 refers to the user information shown in FIG. 3 to determine the mobility user "C" who uses a standard car to be the prospective proxy.

Note that if there is a plurality of mobility users using the same second mobility, the prospective proxy determination unit 110 may determine the mobility user residing closest to the store where the article is purchased to be the prospective proxy. When there is a plurality of mobility users using the same second mobility, the prospective proxy determination unit 110 may determine the mobility user who is randomly selected from among the plurality of mobility users to be the prospective proxy.

When there is a plurality of mobility users using the same second mobility, the prospective proxy determination unit 110 may determine one mobility user to be the prospective proxy, based on attribute information on the requester and attribute information on the plurality of mobility users. The attribute information is, for example, gender or age. For example, the prospective proxy determination unit 110 may determine the mobility user who has the same gender as the requester to be the prospective proxy, or may determine the mobility user who is of the same age as the requester to be the prospective proxy. The attribute information is included in the user information.

In the present second embodiment, to begin with, the prospective proxy determination unit 110 determines a prospective proxy candidate from among the mobility users using the second mobility determined by the second mobility determination unit 109. At this time, the prospective proxy determination unit 110 determines the mobility user residing closest to the store where the article is purchased to be the prospective proxy candidate. Next, the prospective proxy determination unit 110 transmits substitution reservation information to reserve the prospective proxy candidate to perform the substitution for purchase to the user terminal of the prospective proxy candidate. When substitution reservation availability information indicating that the prospective proxy candidate accepts the purchase substitution reservation is received by the communication unit 13, the prospective proxy determination unit 110 determines the prospective proxy candidate to be the prospective proxy. Meanwhile, when the substitution reservation availability information indicating that the prospective proxy candidate does not accept the purchase substitution reservation is received by the communication unit 13, the prospective proxy determination unit 110 determines again the prospective proxy candidate from among other mobility users using the second mobility. At this time, the prospective proxy determination unit 110 determines the mobility user residing second closest to the store where the article is purchased to be the prospective proxy candidate. Then, the prospective proxy determination unit 110 repeatedly determines the prospective proxy candidate and transmits the substitution reservation information until the prospective proxy is determined.

Meanwhile, when there is a plurality of mobility users using the same second mobility, the prospective proxy determination unit 110 may determine all the plurality of mobility users to be the prospective proxy candidate. Then, the prospective proxy determination unit 110 may broadcast the substitution reservation information for reserving all the prospective proxy candidates to perform the substitution for purchase to the user terminals of all the prospective proxy candidates. Then, the prospective proxy determination unit 110 may determine the prospective proxy candidate who first transmits the substitution reservation availability information indicating acceptance of the purchase substitution reservation to be the prospective proxy.

When the first mobility (first mobile body) is identical to the second mobility (second mobile body), the proxy determination unit 105A determines the prospective proxy (prospective proxy user) to be the proxy (third user). When the first mobility is different from the second mobility, the proxy determination unit 105A determines the proxy (third user) who performs the substitution for purchase of the article the requester requests to purchase, from among the mobility users (second user) residing in the predetermined area and using the first mobility (first mobile body) determined by the first mobility determination unit 104. When the first mobility is different from the second mobility, the method for determining the proxy is identical to the method for determining the proxy in the first embodiment.

The configuration of the purchase substitution system in the second embodiment has been described above. Subsequently, the processing of the purchase substitution system will be described.

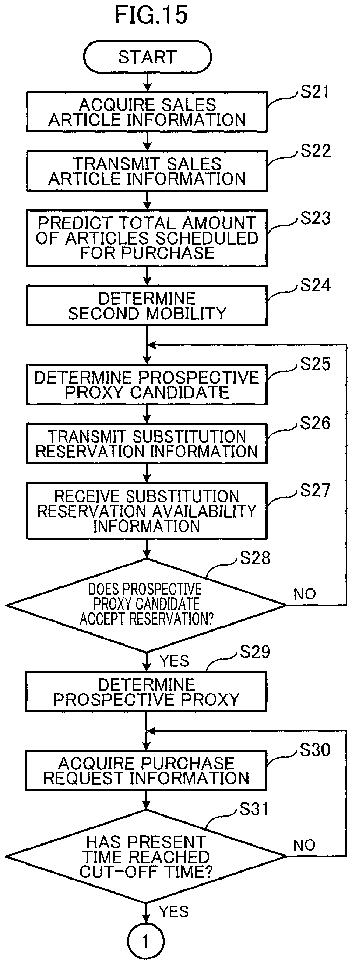

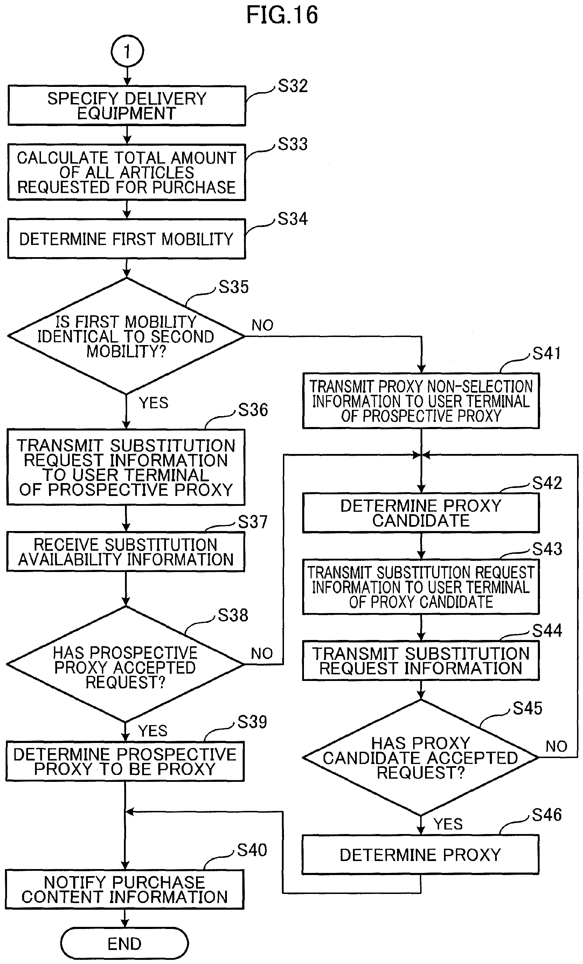

FIG. 15 is a first flowchart showing one example of the processing of the server 1A in the second embodiment of the present disclosure. FIG. 16 is a second flowchart showing one example of the processing of the server 1A in the second embodiment of the present disclosure.

The processing in steps S21 and S22 is identical to the processing in steps S1 and S2 shown in FIG. 5, and thus description thereof will be omitted.

Next, in step S23, the total amount prediction unit 108 predicts the total amount of the articles scheduled for purchase, based on the sales article information regarding the articles available for purchase and the past purchase history of the articles available for purchase. For example, the total amount prediction unit 108 may specify a plurality of articles that has been actually purchased by the purchase substitution in the past on the same day of the week as the day of the week when the purchase substitution is accepted from among the articles available for purchase, and may predict the total amount of the specified plurality of articles as the total amount of the articles scheduled for purchase. For example, when there is an article that is sold at a special low price among articles available for purchase, the total amount prediction unit 108 may count the number of articles that are sold at a special low price and purchased by purchase substitution on another day in the past as the number of articles scheduled for purchase to predict the total amount of the articles scheduled for purchase. For example, the total amount prediction unit 108 may input, into a machine learning model, the name of the article that is sold at a special low price on the release date, and may acquire the predicted total amount of the article sold at a special low price and purchased by the purchase substitution from the machine learning model.

Next, in step S24, the second mobility determination unit 109 determines the second mobility to use for the purchase of the article scheduled for purchase from among a plurality of mobilities based on the total amount predicted by the total amount prediction unit 108. At this time, the second mobility determination unit 109 extracts the mobility corresponding to the total amount predicted by the total amount prediction unit 108 from the total amount to mobility correspondence table stored in the total amount to mobility correspondence table storage unit 125, and determines the extracted mobility to be the second mobility.

Next, in step S25, the prospective proxy determination unit 110 determines the prospective proxy candidate who performs the substitution for scheduled purchase of the article, from among the mobility users residing in the predetermined area and using the second mobility determined by the second mobility determination unit 109. At this time, the prospective proxy determination unit 110 specifies the mobility user who uses the second mobility determined by the second mobility determination unit 109 from the user information on the plurality of mobility users stored in the user database 122, and determines the specified mobility user to be the prospective proxy candidate. When there is a plurality of mobility users who uses the second mobility among the plurality of mobility users registered with the user database 122, the prospective proxy determination unit 110 may determine the mobility user residing at a place closest to the store where the article is purchased to be the prospective proxy candidate among the plurality of mobility users using the second mobility.

When there is a plurality of mobility users who uses the second mobility among the plurality of mobility users registered with the user database 122, the prospective proxy determination unit 110 may determine the mobility user residing at a place closest to the address of the requester who requests for purchase of the article to be the prospective proxy candidate among the plurality of mobility users using the second mobility.

The prospective proxy determination unit 110 may acquire information indicating that it is possible to perform the substitution for purchase on the day when actually accepting the substitution for purchase from the user terminal. Then, the prospective proxy determination unit 110 may determine the mobility user who uses the second mobility and can perform the substitution for purchase on the day when actually accepting the substitution for purchase, among the plurality of mobility users registered with the user database 122, to the prospective proxy candidate.

In this case, for example, the user database 122 may register in advance information regarding the scheduled usage time (date and time, time zone, and the like) of the mobility to use. The prospective proxy determination unit 110 may determine the mobility user who can use the mobility on the day of accepting the purchase substitution among the plurality of mobility users using the second mobility to be the prospective proxy candidate.

Next, in step S26, the prospective proxy determination unit 110 transmits the substitution reservation information to reserve the prospective proxy candidate to perform the substitution for purchase to the user terminal of the prospective proxy candidate via the communication unit 13. Upon receiving the substitution reservation information, based on the substitution reservation information, the user terminals display a substitution reservation acceptance screen for presenting the scheduled date and time of purchase and delivery, the scheduled store where the article is purchase, the mobility scheduled to use, and the delivery equipment required for delivery, and accepting whether to accept the purchase substitution reservation. Then, the user terminals transmit, to the server 1A, the substitution reservation availability information indicating whether the prospective proxy candidate accepts the purchase substitution reservation.

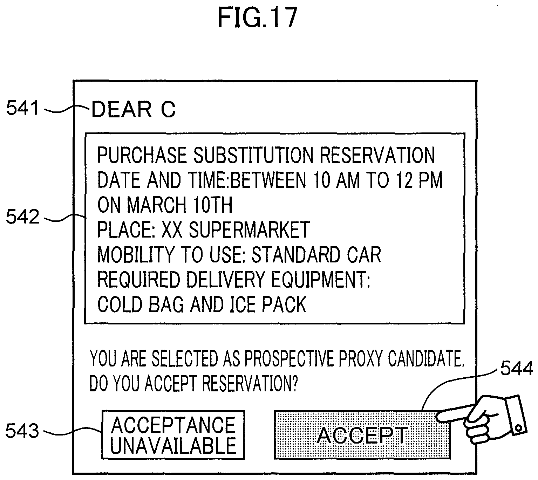

FIG. 17 is a diagram showing one example of the substitution reservation acceptance screen displayed when whether to accept the purchase substitution reservation is input on the user terminals 2A, 2B, and 2C.

On the substitution reservation acceptance screen shown in FIG. 17, a name of the prospective proxy candidate 541, a scheduled purchase content presentation column 542, an acceptance unavailable button 543 for the prospective proxy candidate to decline the purchase substitution reservation, and an acceptance button 544 for the prospective proxy candidate to accept the purchase substitution reservation are displayed. The scheduled purchase content presentation column 542 includes the scheduled date and time of purchase and delivery, the scheduled store where the article is purchased, the mobility scheduled to use, and the delivery equipment required for delivery. The prospective proxy candidate touches the acceptance unavailable button 543 when declining the purchase substitution reservation. The prospective proxy candidate touches the acceptance button 544 when accepting the purchase substitution reservation. When the acceptance unavailable button 543 or the acceptance button 544 is touched, the user terminals 2A, 2B, and 2C transmit, to the server 1, the substitution reservation availability information indicating whether the prospective proxy candidate accepts the purchase substitution reservation.

Next, in step S27, the communication unit 13 receives the substitution reservation availability information indicating whether the prospective proxy candidate accepts the purchase substitution reservation.

Next, in step S28, the prospective proxy determination unit 110 determines whether the prospective proxy candidate has accepted the purchase substitution reservation. Here, when it is determined that the prospective proxy candidate has not accepted the purchase substitution reservation (NO in step S28), the process returns to step S25. Then, in step S25, the prospective proxy determination unit 110 determines the prospective proxy candidate again. At this time, the prospective proxy determination unit 110 may determine the mobility user residing at a place second closest to the store where the article is purchased, among the plurality of mobility users registered with the user database 122 and using the second mobility, to be the prospective proxy candidate.

When there is no mobility user who uses the second mobility determined by the second mobility determination unit 109 in the mobility users registered with the user database 122, or when all the prospective proxy candidates decline the purchase substitution reservation, the prospective proxy determination unit 110 may determine the mobility that has a larger capacity than the mobility determined by the second mobility determination unit 109 to be the second mobility. For example, when there is no mobility user who uses a standard car determined by the second mobility determination unit 109 in the mobility users registered with the user database 122, the prospective proxy determination unit 110 may determine a wagon with a larger capacity than a standard car as the second mobility.

When there is no mobility user who uses the second mobility determined by the second mobility determination unit 109 among the mobility users registered with the user database 122, or when all the prospective proxy candidates decline the purchase substitution reservation, the prospective proxy determination unit 110 may determine the mobility that has a smaller capacity than the mobility determined by the second mobility determination unit 109 to be the second mobility, and determine the plurality of prospective proxy candidates who uses the determined second mobility. For example, when there is no mobility user who uses a standard car determined by the second mobility determination unit 109 among the mobility users registered with the user database 122, the prospective proxy determination unit 110 may determine a bicycle with a luggage rack with a smaller capacity than a standard car as the second mobility. Then, the prospective proxy determination unit 110 may determine a plurality of prospective proxy candidates who uses a bicycle with a luggage rack.

Meanwhile, when it is determined that the prospective proxy candidate has accepted the purchase substitution reservation (YES in step S28), in step S29, the prospective proxy determination unit 110 determines the prospective proxy candidate who has accepted the purchase substitution reservation to be the prospective proxy.

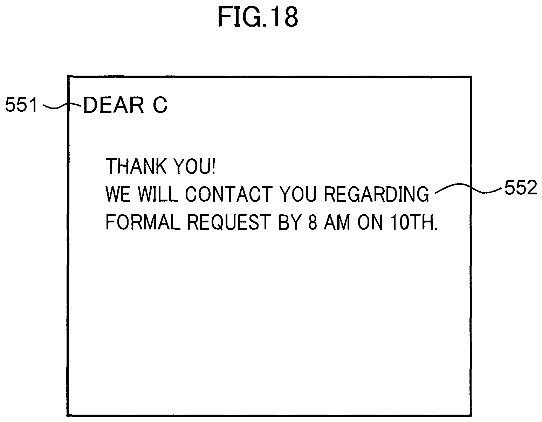

FIG. 18 is a diagram showing one example of a prospective proxy determination notification screen displayed on the user terminal 2C. Note that the user terminal 2C is the user terminal used by the prospective proxy.

When the prospective proxy is determined, the communication unit 13 transmits schedule notification information to the user terminal 2C of the prospective proxy. The schedule notification information includes the scheduled date and time when the purchase substitution is actually requested. The user terminal 2C of the prospective proxy displays the prospective proxy determination notification screen based on the schedule notification information. On the prospective proxy determination notification screen shown in FIG. 18, a prospective proxy name 551 and a request schedule notification column 552 indicating the scheduled date and time when the purchase substitution is actually requested are displayed.

The processing in steps S30 to S34 is identical to the processing in steps S3 to S7 shown in FIG. 5, and thus description thereof will be omitted.

Next, in step S35, the proxy determination unit 105A determines whether the first mobility is identical to the second mobility. Note that the memory 12A stores information indicating the second mobility determined by the second mobility determination unit 109 and information indicating the prospective proxy determined by the prospective proxy determination unit 110.

Here, when it is determined that the first mobility is identical to the second mobility (YES in step S35), in step S36, the proxy determination unit 105A transmits substitution request information for requesting the prospective proxy to perform the substitution for purchase to the user terminal of the prospective proxy via the communication unit 13. Upon receiving the substitution request information, based on the substitution request information, the user terminal displays the substitution acceptance screen for presenting the date and time of purchase and delivery, the store where the article is purchased, the mobility to use, and the delivery equipment required for delivery, and accepting whether to accept the purchase substitution request. Then, the user terminals transmit, to the server 1, substitution availability information indicating whether the prospective proxy accepts the purchase substitution request.

Next, in step S37, the communication unit 13 receives the substitution availability information indicating whether the prospective proxy accepts the purchase substitution request.

Next, in step S38, the proxy determination unit 105A determines whether the prospective proxy has accepted the purchase substitution request. Here, when it is determined that the prospective proxy has not accepted the purchase substitution request (NO in step S38), the process proceeds to step S42.

Meanwhile, when it is determined that the prospective proxy has accepted the purchase substitution request (YES in step S38), in step S39, the proxy determination unit 105A determines the prospective proxy who has accepted the purchase substitution request to be the proxy.

Note that the processing in step S40 is identical to the processing in step S13 shown in FIG. 5, and thus description thereof will be omitted.

Meanwhile, when it is determined that the first mobility is not identical to the second mobility (NO in step S35), in step S41, the proxy determination unit 105A transmits proxy non-selection information for notifying that the prospective proxy is not selected as the proxy to the user terminal of the prospective proxy via the communication unit 13. Upon receiving the proxy non-selection information, the user terminal displays a proxy non-selection screen to notify that the prospective proxy is not selected as the proxy, based on the proxy non-selection information.

Note that in the present second embodiment, when it is determined that the first mobility is not identical to the second mobility, the proxy determination unit 105A may determine whether the capacity of the first mobility is smaller than the capacity of the second mobility. Then, when the capacity of the first mobility is smaller than the capacity of the second mobility, the proxy determination unit 105A may determine the prospective proxy to be the proxy.

Next, in step S42, the proxy determination unit 105A determines the proxy candidate who performs the substitution for purchase of the article the requester requests to purchase, from among the mobility users residing in the predetermined area and using the first mobility determined by the first mobility determination unit 104.

Note that the processing in steps S42 to S46 is identical to the processing in steps S8 to S12 shown in FIG. 5, and thus description thereof will be omitted.

In this way, before acquiring the first information, the total amount of the articles scheduled for purchase is predicted based on the sales article information regarding the articles available for purchase and the past purchase history of the articles available for purchase. Based on the predicted total amount, the second mobility to use for purchasing the article scheduled for purchase is determined from among the plurality of mobilities, and the prospective proxy who performs the substitution for scheduled purchase of the article is determined from among the mobility users who use the determined second mobility. Therefore, by securing in advance the mobility that can load the article scheduled for purchase and the prospective proxy who uses the mobility, the actual proxy can be determined smoothly.

Note that in the present first and second embodiments, the processor 11 includes the delivery equipment specification unit 106, and the purchase content information includes information regarding the delivery equipment. However, the present disclosure is not particularly limited to this example. The processor 11 does not have to include the delivery equipment specification unit 106, and the purchase content information does not have to include information regarding the delivery equipment.

Note that in each of the above embodiments, each constituent element may include dedicated hardware or may be implemented by execution of a software program suitable for each constituent element. Each constituent element may be implemented by a program execution unit, such as a CPU or a processor, reading and executing a software program recorded in a recording medium such as a hard disk or a semiconductor memory. The program may be executed by another independent computer system by being recorded in a recording medium for transfer or by being transferred via a network.

Some or all functions of the devices according to the embodiments of the present disclosure are implemented as large scale integration (LSI), which is typically an integrated circuit. These may be individually integrated into one chip, or may be integrated into one chip so as to include some or all functions. Circuit integration is not limited to LSI, and may be implemented by a dedicated circuit or a general-purpose processor. A field programmable gate array (FPGA), which can be programmed after manufacturing of LSI, or a reconfigurable processor in which connection and setting of circuit cells inside LSI can be reconfigured may be used.

Some or all functions of the devices according to the embodiments of the present disclosure may be implemented by a processor such as a CPU executing a program.

The numerical figures used above are all illustrated to specifically describe the present disclosure, and the present disclosure is not limited to the illustrated numerical figures.

The order in which each step shown in the above flowcharts is executed is for specifically describing the present disclosure, and may be any order other than the above order as long as a similar effect is obtained. Some of the above steps may be executed simultaneously (in parallel) with other steps.

### Industrial Applicability

The technology according to the present disclosure, which can determine the more optimal proxy for purchase, is useful as a technology for determining the proxy who performs the substitution for purchase for the requester.

## Claims

1. An information processing method in an information processing device, the information processing method comprising:
acquiring first information regarding an article a first user residing in a predetermined area requests to purchase;
calculating a total amount of the article the first user requests to purchase based on the first information;
determining a first mobile body to be used for purchasing the article the first user requests to purchase, from among a plurality of mobile bodies based on the total amount;
determining a third user who performs substitution for purchase of the article the first user requests to purchase, from among second users residing in the predetermined area and using the determined first mobile body; and
notifying the determined third user of second information regarding the purchase of the article indicated by the first information.

2. The information processing method according to claim 1, further comprising presenting third information regarding the article available for purchase to a plurality of the first users residing in the predetermined area,
wherein acquiring the first information includes acquiring the first information regarding the article at least one first user of the plurality of first users requests to purchase.

3. The information processing method according to claim 1 or 2, wherein the article is sold at one or more stores located in the predetermined area.

4. The information processing method according to claim 1, further comprising:
predicting the total amount of the article scheduled for purchase based on third information regarding the article available for purchase and a past purchase history of the article available for purchase before acquiring the first information;
determining a second mobile body to be used for purchasing the article scheduled for purchase from among the plurality of mobile bodies based on the predicted total amount; and
determining a prospective proxy user who performs substitution for the scheduled purchase of the article from among the second users residing in the predetermined area and using the determined second mobile body.

5. The information processing method according to claim 4, wherein determining the third user includes determining the prospective proxy user to be the third user when the first mobile body is identical to the second mobile body.

6. The information processing method according to claim 1 or 2, further comprising specifying delivery equipment required when delivering the article based on an attribute of the article,
wherein the second information includes information regarding the delivery equipment.

7. The information processing method according to claim 1 or 2, wherein the plurality of mobile bodies includes two or more types of mobile bodies each having a different loadable capacity.

8. The information processing method according to claim 7, wherein the two or more types of mobile bodies include a car, a motorcycle, and a bicycle.

9. The information processing method according to claim 1 or 2, wherein the second information includes purchase list information indicating a list of the article to be purchased on behalf of the first users and delivery list information indicating a list of the purchased article for each of the first users of delivery destinations.

10. The information processing method according to claim 1 or 2, wherein determining the third user includes determining the second user residing at a place closest to a store where the article is purchased as the third user from among the second users residing in the predetermined area and using the determined first mobile body.

11. The information processing method according to claim 1 or 2, wherein determining the third user includes determining the second user residing at a place closest to an address of the first user as the third user from among the second users residing in the predetermined area and using the determined first mobile body.

12. The information processing method according to claim 1 or 2, wherein determining the third user includes determining the second user who is able to purchase the article on a day when accepting substitution for purchase of the article as the third user from among the second users residing in the predetermined area and using the determined first mobile body.

13. An information processing device comprising:
an acquisition unit that acquires first information regarding an article a first user residing in a predetermined area requests to purchase;
a calculation unit that calculates a total amount of the article the first user requests to purchase based on the first information;
a mobile body determination unit that determines a first mobile body to be used for purchasing the article the first user requests to purchase, from among a plurality of mobile bodies based on the total amount;
a user determination unit that determines a third user who performs substitution for purchase of the article the first user requests to purchase, from among second users residing in the predetermined area and using the determined first mobile body; and
a notification unit that notifies the determined third user of second information regarding the purchase of the article indicated by the first information.

14. An information processing program for causing a computer to function as:
an acquisition unit that acquires first information regarding an article a first user residing in a predetermined area requests to purchase;
a calculation unit that calculates a total amount of the article the first user requests to purchase based on the first information;
a mobile body determination unit that determines a first mobile body to be used for purchasing the article the first user requests to purchase, from among a plurality of mobile bodies based on the total amount;
a user determination unit that determines a third user who performs substitution for purchase of the article the first user requests to purchase, from among second users residing in the predetermined area and using the determined first mobile body; and
a notification unit that notifies the determined third user of second information regarding the purchase of the article indicated by the first information.
